# EUROPÄISCHE PATENTSCHRIFT

(11) **EP 0 524 454 B1**
(45) Veröffentlichungstag und Bekanntmachung des Hinweises auf die Patenterteilung: **12.06.1996**
(21) Anmeldenummer: 92110929.4
(22) Anmeldetag: 27.06.1992
(51) Int. Cl.: A01D 90/02, A01D 87/00

(54) **Selbstladewagen**
Self-loading wagon
Véhicule autochargeur

(30) Priorität: 20.07.1991 DE 4124144
(43) Veröffentlichungstag der Anmeldung: 27.01.1993
(73) Patentinhaber: Alois Pöttinger Maschinenfabrik GmbH, A-4710 Grieskirchen (AT)
(72) Erfinder: Frauscher, Josef, A-4942 Gurten 50 (AT); Schremmer, Wolfgang, A-4062 Thening 50 (AT)
(74) Vertreter: Dupal, Helmut, Dipl-Ing.

(56) Entgegenhaltungen:
- EP-A- 0 074 172
- WO-A-91/03150
- CH-A- 355 034
- DE-C- 1 160 229
- US-A- 3 999 674

## Beschreibung

Die Erfindung bezieht sich auf einen Selbstladewagen, bei dem eine Aufnahmevorrichtung auf dem Boden liegendes Halm- und Blattgut aufnimmt und an eine Fördervorrichtung Übergibt, die das Erntegut durch einen Förderkanal im wesentlichen nach oben gerichtet in einen Laderaum befördert.

Bei einem Ladewagen dieser Art, wie er in der DE-C- 1160 229 beschrieben ist, wird das in den Laderaum beförderte Erntegut an der Vorderwand hochgeschoben, bis es nach hinten fallend einen flachen Haufen bildet.

Mit dem Kratzboden kann dieser Ernteguthaufen nach hinten bewegt werden und neuerlich Erntegut eingefüllt werden.

Schließlich ist der Laderaum bei Beladung mit Rauhfutter bei Beendigung des Ladevorganges im Vorderteil bis an die Spannseile der Oberseite des Laderaumes mit gepreßtem Ladegut gefüllt, während vor der Laderaumrückwand ein erheblicher Leerraum verbleibt, der nicht mehr zu füllen ist, wodurch die Pressung im hinteren Laderaum gering bleibt und insgesamt ungenügend ist.

Bei Beladung mit Grünfutter oder Anwelkfutter hingegen muß wegen der sonst auftretenden Überlastung der Fördervorrichtung und des Antriebsstranges die Füllung auf eine geringere Füllhöhe beschränkt bleiben und der Kratzboden bereits früher betätigt werden, damit der gebildete Guthaufen den Förderkanal freigibt. Die Beladung geschieht dann nicht gleichmäßig, weil häufig der Guthaufen zu früh weiterbefördert wird und ebenso verbleibt vor der Laderaumrückwand ein Freiraum, oder das Gut wird zu stark angepreßt, was zu Schwierigkeiten insbesonders beim Öffnen führt, oder das Ladegut wird durch die hohe Pressung beschädigt und gequetscht.

Dabei tritt bei Selbstladewagen mit hoher Ladegeschwindigkeit und Leistungsaufnahme als weiterer Nachteil ein häufig erzwungener Stillstand beim Beladen auf, wenn durch Überlastung des Antriebsstranges beispielsweise eine als Sicherung eingebaute Rutschkupplung anspricht, wenn zuviel Ladegut aufgenommen und gefördert wird, weil das rechtzeitige Einschalten des Kratzbodens oder das Ausschwenken des Schneidwerkes von Hand aus nicht mehr möglich ist, will man nicht eine sehr ungenügende Beladung in Kauf nehmen.

Dadurch wird es notwendig anzuhalten, die Ursache der Überlastung zu beseitigen und wieder anzufahren, wodurch der Ladevorgang insgesamt wesentlich langsamer abläuft, als es der Leistungsfähigkeit des Selbstladewagens entspräche.

Ziel der Erfindung ist es diese Überlastungen bereits vor ihrem zu starken Austeigen sebsttätig zu erfassen und abzubauen und damit Stillstände des Selbstladewagens zu vermeiden und dennoch eine möglichst gleichmäßige, hohe Beladungsdichte, angepaßt an die Beschaffenheit des Ladegutes zu erreichen.

Bei einem Ladewagen der eingangs beschriebenen Art wird dies mit den Merkmalen des kennzeichnenden Teiles des Anspruches 1 erreicht. Die Unteransprüche, die ebenso wie Anspruch 1, gleichzeitig einen Teil der Beschreibung bilden, betreffen besonders vorteilhafte Ausgestaltungen der Erfindung.

Durch das Einschalten des Kratzbodenantriebes wird die hohe Verdichtung oder die zu hohe Gutsäule über dem Förderkanal herabgesetzt, indem das Ladegut weggeschoben wird.

Wesentlich ist jedoch, daß der Kratzboden abgeschaltet wird, sobald die voreingestellte Belastung wieder unterschritten wird, damit ein hoher Beladungsgrad erreicht wird. Wegen der hohen Ansprechgeschwindigkeit wird dadurch ein gleichmäßigerer und höherer Beladungsgrad erzielbar als dies beim Steuern von Hand aus möglich wäre.

Die Belastung wird dabei vorteilhaft auf einen Bruchteil der höchsten für den Antriebsstrang des Selbstladewagens zulässigen Belastung - etwa 80 bis 90% - eingestellt, wodurch Stillstand durch Überlastung sicher vermieden wird.

Eine weitere Verbesserung wird dadurch erreicht, daß in jenen Fällen, in denen die Belastung trotz eingeschaltetem Kratzboden weiter ansteigt, bei einer höheren, vorher eingestellten Belastung des Antriebsstranges des Selbstladewagens - zwischen 90 und 100% - die Steuervorrichtung für das Stellmittel, zumeist ein hydraulischer Zylinder, eingeschaltet wird, der das Schneidwerk um einen ebenfalls voreingestellten Weg ausschwenkt, wodurch die Messer um einen Teil der Tiefe des Förderkanals von 30 bis 50 mm aus diesem herausgezogen werden, was für gewöhnlich ausreichend ist, um Verstopfungen des Schneidwerkes oder Fremdkörper durchzulassen.

Bleibt jedoch die Belastung des Antriebsstranges aufrecht, ist es vorteilhaft die Messer des Schneidwerkes vollständig auszuschwenken.

Die Einstellung der Belastung, bei der Kratzboden oder Schneidwerk zu schalten ist, kann mittels einer Meßanordnung geschehen, indem für die verschiedenen Ladegüter die Belastungswerte gemessen werden und die geeigneten Belastungsgrenzen eingestellt werden.

Als Druckaufnehmer können eine ganze Anzahl verschiedener Sensoren dienen, wobei insbesonders wegabhängige oder druckabhängige Sensoren am günstigsten Anwendung finden.

Vorteilhafterweise wird der Druckaufnehmer zwischen dem Getriebegehäuse und dem Wagenrahmen oder zwischen einer Spannvorrichtung und dem Wagenrahmen eingesetzt, wobei Gehäuse und Spannvorrichtung über Rückstellmittel federnd eingespannt sind.

Der Druckaufnehmer ist mit der Schaltvorrichtung oder der Steuervorrichtung von Kratzboden oder dem Stellmittel für das Schneidwerk über eine Übertragungsvorrichtung verbunden, aber besonders elektrische oder hydraulische Verbindungen sind günstig, besonders wenn eine elektrohydraulische Steuerung von Bedienungsfunktionen ohnedies eingerichtet ist.

Selbstverständlich kann die Schaltung des Signals für die Schaltvorrichtung des Kratzbodens oder die Steuervorrichtung des Stellmittels des Schneidwerkes im Kraftaufnehmer erfolgen, oder an diesem angeschlossen sein, oder als ein Bauteil in die Übertragungsvorrichtung eingebaut sein.

Besonders vorteilhaft zur Beseitigung von Störungen durch Überlastung ist es, wenn zwei Schaltstellungen vorgesehen sind, in denen der Kraftaufnehmer bei zwei unterschiedlichen Belastungen Signale zum Einschalten von Kratzboden oder Ausschwenken des Schneidwerkes abgibt, weil dadurch auch Störungen des Schneidwerkes oder zwischen Aufnahmevorrichtung und Schneidwerk erfaßt werden.

Die Art des Kraftaufnehmers richtet sich besonders nach der Art der Antriebe oder des Stellmittels und danach, ob der Selbstladewagen bereits mit einer elektrischen oder elektrohydraulischen Anlage für Bedienungsfunktionen ausgestattet ist.

Es ist eine Vielzahl von unterschiedlichen Kraftaufnehmern oder Übertragungsvorrichtungen möglich, wobei eine elektrohydraulische Steuerungs-und Schaltvorrichtung am günstigsten und zuverlässigsten und mit vertretbarem Aufwand anzuwenden ist.

Die Erfindung wird nachstehend an Hand der Zeichnung zweier Ausführungsformen beschrieben.

Es zeigt:

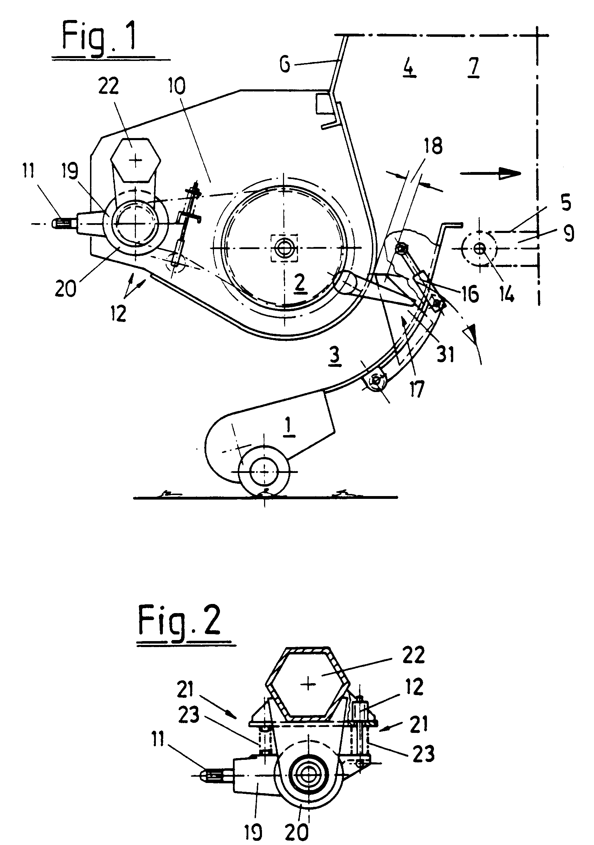

- Fig. 1: den Vorderteil eines Selbstladewagens in Seitenriß, schematisch,
- Fig. 2: einen Ausschnitt aus Fig.1, mit dem Eingangsgetriebe und einem wegabhängigen Kraftaufnehmer, schematisch,

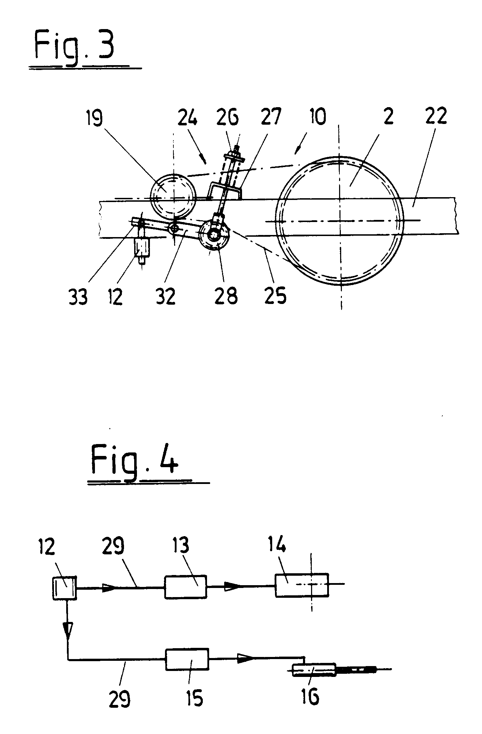

- Fig. 3: einen Ausschnitt aus dem Antriebsstrang von Fig.1 mit einem biegeschlaffen Antriebsmittel und einer Spannvorrichtung mit Kraftaufnehmer, schematisch, und
- Fig. 4: ein Blockschaltbild der Steuervorrichtung.

Bei einem Selbstladewagen wird das auf dem Boden liegende Halm-und Blattgut von einer Aufnahmevorrichtung 1 aufgenommen und in einem Förderkanal 3 an eine Fördervorrichtung 2 übergeben, die es durch den Förderkanal 3 nach oben gerichtet, gewöhnlich entlang der Vorderwand 6 eines Laderaumes 4 in diesen abgibt, der noch von Zwei Seitenwänden 7, einem als Kratzboden 5 ausgebildeten Boden 9 und aus einer zu öffnenden Rückwand gebildet wird. An der Oberseite des Laderaumes 4 sind bei Selbstladewagen, die auch für Rauhfutter und Stroh bestimmt sind, Abdeckseile angebracht, die von der Vorderwand 6 bis zur Rückwand reichen und bei Rauhfutter oder Stroh als Ladegut zum Zurückhalten desselben dienen.

Die Fördervorrichtung 2 und der Kratzboden 5 werden von einem Eingangsgetriebe 19, das mit einem Gelenkwellenanschluß 11 für den Antrieb über eine Gelenkwelle von einem Zugfahrzeug her ausgestattet ist, über den Antriebsstrang 10 angetrieben.

Das Getriebegehäuse 20 des Eingangsgetriebes 19 ist an dem Wagenrahmen 22 mit einer Verschraubung 21 unter Zwischenschaltung von Federungen 23 beweglich befestigt.

Zwischen dem Wagenrahmen 22 und einer Federung 23 ist ein Kraftaufnehmer 12 in Form eines wegabhängigen Druckaufnehmers eingesetzt, der mit dem Bolzen der Verschraubung 21 verbunden ist und bei Überschreiten einer vorher eingestellten Belastung des Antriebsstranges 10 von zwischen 80 und 90% der maximal zulässigen Belastung des Antriebsstranges 10 elektrische Signale abgibt, die über eine Übertragungsvorrichtung 29 einer Schaltvorrichtung 13 zugeleitet werden, die bei Erhalt eines Signals den Kratzbodenantrieb 14 einschaltet. Dieser transportiert das aufgehäufte Ladegut nach hinten, wodurch die Belastung des Antriebsstranges 10 wieder absinkt, wenn nicht im Bereich der Fördervorrichtung 2 eine Verstopfung oder ein Fremdkörper zwischen Fördervorrichtung 2 und den Messern 31 des Schneidwerkes 17 eingeklemmt ist.

In diesem Fall nimmt die Belastung des Antriebsstranges 10 weiter und äußerst schnell zu, worauf bei Überschreitung einer zweiten, vorher eingestellten Belastung des Antriebsstranges 10 eine Steuervorrichtung 15 geschaltet wird, die ein Stellmittel 16 betätigt, welches die Messer 31 des Schneidwerkes 17 zunächst um 30 bis 50 mm aus dem Förderkanal 3 zurückschwenkt, wodurch ein Durchgang für das verstopfende Ladegut oder den Fremdkörper geschaffen wird.

Danach sinkt die Belastung des Antriebsstranges 10 rasch ab und das Schneidwerk 17 wird vom Stellmittel 16 wieder eingeschwenkt und anschließend der Kratzboden 5 stillgesetzt.

Bleibt jedoch beim Zurückschwenken der Messer 31 die hohe Belastung aufrecht, so wird das Stellmittel 16 von der Steuervorrichtung 15 wieder betätigt und die Messer 31 durch Verschwenken des Schneidwerkes 17 vollständig aus dem Förderkanal 3 ausgeschwenkt.

Nach Absinken der Belastung wird auch hier das Stellmittel 16 von der Steuervorrichtung 15 in Gegenrichtung beaufschlagt geschaltet und das Schneidwerk 17 mit den Messern 31 wieder in den Förderkanal 3 eingeschwenkt, sowie der Kratzboden abgeschaltet.

Bei Anwendung eines druckabhängigen Kraftaufnehmers 12 ist dieser unmittelbar zwischen Getriebegehäuse 20 und Wagenrahmen 22 eingesetzt, wobei praktisch kein Federweg für die Schaltung erforderlich ist.

Bei einer anderen Ausführungsform ist der Kraftaufnehmer 12 mit einer Spannvorrichtung 24 für das biegeschlaffe Antriebsmittel 25 verbunden. Dabei ist das Tastmittel 28 der Spannvorrichtung 24 mit einem Doppelhebel 32 gekoppelt, der am Wagenrahmen 22 schwenkbar gelagert ist und mit seinem freien Hebelarm 33 auf den Kraftaufnehmer 12 einwirkt.

Die Belastungswerte des Antriebsstranges 10, bei denen der Kratzboden 5 eingeschaltet werden soll, oder bei denen die Messer 31 zurück-oder ausgeschwenkt werden sollen, können durch Messungen an dem Antriebsstrang 10 im praktischen Betrieb für bestimmte, vorgesehene Ladegüter ermittelt und an dem Kraftaufnehmer 12 und der Steuervorrichtung 15 eingestellt werden.

Die rasche Abfolge der einzelnen Schalt- und Stellvorgänge macht das Eingreifen einer Bedienungsperson unmöglich und läuft im wesentlichen selbsttätig ab.

### Legende :

- 1: Aufnahmevorrichtung
- 2: Fördervorrichtung
- 3: Förderkanal
- 4: Laderaum
- 5: Kratzboden
- 6: Vorderwand des Laderaumes 4
- 7: Seitenwand des Laderaumes 4
- 8:
- 9: Boden des Laderaumes 4
- 10: Antriebsstrang des Selbstladewagens
- 11: Gelenkwellenanschluß des Selbstladewagens
- 12: Kraftaufnehmer
- 13: Schaltvorrichtung des Kratzbodenantriebes 14
- 14: Kratzbodenantrieb
- 15: Steuervorrichtung
- 16: Stellmittel
- 17: Schneidwerk
- 18: Teil der Tiefe des Förderkanals 3
- 19: Eingangsgetriebe des Selbstladewagens
- 20: Getriebegehäuse des Eingangsgetriebes 19
- 21: Verschraubung zwischen dem Getriebegehäuse 20 und dem Wagenrahmen 22
- 22: Wagenrahmen
- 23: Federung zwischen Getriebegehäuse 20 und Wagenrahmen 22
- 24: Spannvorrichtung des Antriebsstranges 10
- 25: biegeschlaffes Antriebsmittel des Antriebsstranges 10
- 26: Spannmittel der Spannvorrichtung 24
- 27: Abstützung der Spannvorrichtung 24 am Wagenrahmen 22
- 28: Tastmittel
- 29: Übertragungsvorrichtung
- 30: Schaltvorrichtung
- 31: Messer des Schneidwerkes 17
- 32: Doppelhebel der Spannvorrichtung 24
- 33: freier Hebelarm des Doppelhebels 32

## Patentansprüche

1. Selbstladewagen zum Transportieren von Halm-und Blattgut, bei dem eine Aufnahmevorrichtung (1) das Erntegut vom Boden aufnimmt und an eine Fördervorrichtung (2) übergibt, die über einen Antriebsstrang (10) vom Gelenkwellenanschluß (11) des Selbstladewagens her angetrieben wird und das Ladegut durch einen Förderkanal (3) in einen Laderaum (4) abgibt, der von einer Vorderwand (6), zwei Seitenwänden (7), einer zu öffnenden Rückwand und von einem antreibbaren Kratz-oder Rollboden (5) als Boden (9) gebildet wird, dadurch gekennzeichnet, daß im Antriebsstrang (10) zwischen dem Gelenkwellenanschluß (11) des Selbstladewagens und der Fördervorrichtung (2) ein Kraftaufnehmer (12) zur Bestimmung der Belastung des Antriebsstranges (10) eingesetzt ist, der bei Überschreitung einer voreingestellten Belastung über eine Schaltvorrichtung (13) den Kratzbodenantrieb (14) einschaltet und nach Absinken der Belastung unter die voreingestellte Belastung wieder abschaltet.

2. Selbstladewagen nach Anspruch 1, dadurch gekennzeichnet, daß der Kraftaufnehmer (12) im Antriebsstrang (10) des Ladewagens, bei Überschreitung einer noch höheren, ebenfalls voreingestellten Belastung des Antriebsstranges (10), eine Steuervorrichtung (15) für ein Stellmittel (16) schaltet, das das Schneidwerk (17) mit den Messern (31) zumindest über einen Teil (18) der Tiefe des Förderkanals (3) ausschwenkt und nach Absinken der Belastung unter die voreingestellte Belastung, vorzugsweise selbsttätig, wieder einschwenkt.

3. Selbstladewagen nach dem vorhergehenden Anspruch, dadurch gekennzeichnet, daß der Kraftaufnehmer (12) nach Verstreichen einer vorher eingestellten Zeit, während der die höhere voreingestellte Belastung des Antriebsstranges (10) aufrechtbleibt, die steuervorrichtung (15) des Stellmittels (16) nochmals einschaltet, bis das Schneidwerk (17) mit den Messern (31) aus dem Förderkanal (3) vollständig ausgeschwenkt ist und nach Sinken der Belastung unter die voreingestellte Belastung, vorzugsweise selbsttätig, wieder einschwenkt.

4. Selbstladewagen nach einem der vorhergehenden Ansprüche, dadurch gekennzeichnet, daß der Kraftaufnehmer (12) als wegabhängiger Aufnehmer oder als druckabhängiger Aufnehmer ausgebildet ist.

5. Selbstladewagen nach einem der vorhergehenden Ansprüche, dadurch gekennzeichnet, daß der Kraftaufnehmer (12) am Eingangsgetriebe (19) des Selbstladewagens zwischen Getriebegehäuse (20) und der Verschraubung (21) mit dem Wagenrahmen (22), oder zwischen der Verschraubung (21) und dem Wagenrahmen (22), oder unmittelbar zwischen dem Getriebegehäuse (20) und dem Wagenrahmen (22) eingesetzt ist, wobei Getriebegehäuse (20) und Wagenrahmen (22) über eine Federung (23) nachgiebig miteinander verbunden sind.

6. Selbstladewagen nach den Ansprüchen 1 bis 3, dadurch gekennzeichnet, daß der Kraftaufnehmer (12) mit einer Spannvorrichtung (24) für ein biegeschlaffes Antriebsmittel (25) des Antriebsstranges (10) des Selbstladewagens verbunden ist und zwischen einem Spannmittel (26) und einer Abstützung (27) der Spannvorrichtung (24) am Wagenrahmen (22) oder zwischen einem Tastmittel (28) der Spannvorrichtung (24) und dem Spannmittel (26) eingesetzt ist.

7. Selbstladewagen nach Anspruch 2, dadurch gekennzeichnet, daß der Kraftaufnehmer (12) mit einer Spannvorrichtung (24) für ein biegeschlaffes Antriebsmittel (25) des Antriebsstranges (10) des Selbstladewagens verbunden ist und zwischen dem Tastmittel (28) der Spannvorrichtung (24) und dem Wagenrahmen (22) eingesetzt ist.

8. Selbstladewagen nach einem der vorhergehenden Ansprüche, dadurch gekennzeichnet, daß der Kraftaufnehmer (12) oder die Übertragungsvorrichtung (29) wenigstens eine voreinstellbare Schaltstellung aufweist, bei der die Schaltvorrichtung (13) des Kratzbodenantriebes (14) einschaltet oder abschaltet.

9. Selbstladewagen nach einem der vorhergehenden Ansprüche, dadurch gekennzeichnet, daß der Kraftaufnehmer (12) oder die Übertragungsvorrichtung (29) wenigstens zwei voreinstellbare Schaltstellungen aufweist, wovon bei einer die Steuervorrichtung (15) für die Betätigung des Stellmittels (16) eingeschaltet oder abgeschaltet wird.

10. Selbstladewagen nach einem der beiden vorhergehenden Ansprüche, dadurch gekennzeichnet, daß der Kraftaufnehmer (12) über eine Übertragungsvorrichtung (29) in einer Schaltstellung mit der Schaltvorrichtung (13) des Kratzbodenantriebes (14) und/oder in einer anderen Schaltstellung mit der Steuervorrichtung (15) des Stellmittels (16) für das Ausschwenken oder Einschwenken des Schneidwerkes (17) verbunden ist.

11. Selbstladewagen nach einem der vorhergehenden Ansprüche, dadurch gekennzeichnet, daß der Kraftaufnehmer (12) als mechanischer Aufnehmer ausgebildet ist und die Übertragungsvorrichtung (29) aus einem mechanischen Gestänge besteht.

12. Selbstladewagen nach einem der vorhergehenden Ansprüche, dadurch gekennzeichnet, daß der Kraftaufnehmer (12) als elektromechanischer, induktiver, piezoelektrischer, hydromechanischer oder hydraulischer Aufnehmer und die Übertragungsvorrichtung (29) als elektrische oder hydraulische Übertragungsleitung ausgebildet ist.

## Claims

1. A self-loading wagon for transporting stalk and leaf material, wherein a pick-up device (1) picks up the reaped material from the ground and transfers it to a feed device (2) which is driven from the drive-shaft connection (11) of the self-loading wagon via a drive line (10) and which conveys the material for loading through a feed channel (3) into a loading space (4) formed by a front wall (6), two sidewalls (7), an opening rear wall and a drivable scraper or roller floor (5) as a floor (9), characterised in that a force transducer (12) is inserted into the drive line (10) between the drive-shaft connection (11) of the self-loading wagon and the feed device (2) to determine the load on the drive line (10) and switches on the scraper-floor drive (14) via a switching device (13) when a predetermined load is exceeded and switches it off again when the load falls below the predetermined load.

2. A self-loading wagon according to claim 1, characterised in that, when an even higher, likewise predetermined load on the drive line (10) is exceeded, the force transducer (12) in the drive line (10) of the loading wagon actuates a control device (15) for an adjusting means (16) which pivots out a cutter (17) with blades (31) over at least part (18) of the depth of the feed channel (3) and, when the load has fallen below the predetermined load, pivots it in again, preferably automatically.

3. A self-loading wagon according to the preceding claim, characterised in that, after a predetermined time has elapsed, during which the higher predetermined load on the drive line (10) is maintained, the force transducer (12) again switches on the control device (15) for the adjusting means (16) until the cutter (17) with the blades (31) has been fully pivoted out of the feed channel (3) and, when the load has fallen below the predetermined load, pivots it in again, preferably automatically.

4. A self-loading wagon according to any one of the preceding claims, characterised in that the force transducer (12) is formed as a path-dependent transducer or as a pressure-dependent transducer.

5. A self-loading wagon according to any one of the preceding claims, characterised in that the force transducer (12) is provided on the input transmission (19) of the self-loading wagon between the transmission casing (20) and the bolt connection (21) to the wagon frame (22), or between the bolt connection (21) and the wagon frame (22), or directly between the transmission casing (20) and the wagon frame (22), the transmission casing (20) and the wagon frame (22) being flexibly connected by a spring system (23).

6. A self-loading wagon according to claims 1 to 3, characterised in that the force transducer (12) is connected to a tensioning device (24) for a slack drive means (25) of the drive line (10) of the self-loading wagon and is inserted between a tensioning means (26) and a means (27) for supporting the tensioning device (24) on the wagon frame (22) or between a contacting means (28) of the tensioning device (24) and the tensioning means (26).

7. A self-loading wagon according to claim 2, characterised in that the force transducer (12) is connected to a tensioning device (24) for a slack drive means (25) of the drive line (10) of the self-loading wagon and is inserted between the contacting means (28) of the tensioning device (24) and the wagon frame (22).

8. A self-loading wagon according to any one of the preceding claims, characterised in that the force transducer (12) or the transmission device (29) has at least one predeterminable operating position in which the switching device (13) for the scraper-floor drive (14) is switched on or off.

9. A self-loading wagon according to any one of the preceding claims, characterised in that the force transducer (12) or the transmission device (29) has at least two predeterminable operating positions, in one of which the control device (15) for actuating the adjusting means (16) is switched on or off.

10. A self-loading wagon according to either one of the two preceding claims, characterised in that the force transducer (12) is connected, via a transmission device (29), to the switching device (13) for the scraper-floor drive (14) in one operating position and/or to the control device (15) for the adjusting means (16) for pivoting the cutter (17) in and out in another operating position.

11. A self-loading wagon according to any one of the preceding claims, characterised in that the force transducer (12) is formed as a mechanical transducer and the transmission device (29) comprises mechanical linkage.

12. A self-loading wagon according to any one of the preceding claims, characterised in that the force transducer (12) is formed as an electromechanical, inductive, piezoelectric, hydromechanical or hydraulic transducer and the transmission device (29) is formed as an electric or hydraulic transmission line.

## Revendications

1. Véhicule autochargeur destiné au transport de produits en tige et en feuille, dans lequel un dispositif de réception (1) reçoit le produit de la récolte depuis le sol et le transfère à un dispositif de manutention (2) qui est entraîné par une chaîne motrice (10) depuis un raccord une prise d'arbre à transmission articulée (11) du véhicule autochargeur et décharge le produit chargé par un canal de manutention (3) dans une chambre de chargement (4) qui est constituée par une paroi avant (6), deux parois latérales (7), une paroi arrière à ouvrir et par un plancher à racloir ou à rouleau (5) formant le plancher (9) pouvant être entraîné, caractérisé en ce qu'entre la prise d'arbre à transmission articulée (11) du véhicule autochargeur et le dispositif de manutention (2) dans la chaîne motrice (10), est prévu un transducteur de force (12) pour la détermination de la charge de la chaîne motrice (10), qui en cas de dépassement d'une charge préétablie, enclenche l'entraînement du plancher à racloir (14) par l'intermédiaire d'un dispositif de commutation (13) et en cas de diminution de la charge au-dessous de la charge préréglée, le coupe à nouveau.

2. Véhicule autochargeur selon la revendication 1, caractérisé en ce que le transducteur de force (12) dans la chaîne motrice (10) du véhicule chargeur enclenche un dispositif de commande (15) pour un organe de réglage (16) en cas de dépassement d'une charge encore supérieure, également préréglée de la chaîne motrice (10), qui fait basculer le mécanisme de coupe (17) avec les lames (31) au moins sur une partie (18) de la profondeur du canal de manutention (13) et la fait rebasculer en position après la réduction de la charge au-dessous de la charge préréglée, de préférence automatiquement.

3. Véhicule autochargeur selon la revendication précédente, caractérisé en ce que le transducteur de force (12) après l'écoulement d'un temps préréglé, au cours duquel la charge préréglée plus élevée de la chaîne motrice (10) demeure en position, le dispositif de commande (5) de l'organe de réglage (16) est à nouveau enclenché jusqu'à ce que le mécanisme de coupe (17) avec les lames (13) bascule complètement en dehors du canal de manutention (3) et à l'abaissement de la charge au-dessous de la charge préréglée, rebascule en position de préférence automatiquement.

4. Véhicule autochargeur selon l'une des revendications précédentes, caractérisé en ce que le transducteur de force (12) est conçu sous forme de transducteur dépendant de la voix ou de transducteur dépendant de la pression.

5. Véhicule autochargeur selon l'une des revendications précédentes, caractérisé en ce que le transducteur de force (12) est disposé au niveau du réducteur d'entrée (19) du véhicule autochargeur entre le carter de réducteur (20) et la visserie (21) avec le châssis du véhicule (22) ou entre la visserie (21) et le châssis de véhicule (22), ou directement entre le carter de réducteur (20) et le châssis de véhicule (22), le carter de réducteur (20) et le châssis de véhicule (22) étant raccordés entre eux de façon élastique par une suspension (23).

6. Véhicule autochargeur selon les revendications 1 à 3, caractérisé en ce que le transducteur de force (12) est raccordé à un dispositif de tension (24) pour un moyen d'entraînement flexible (25) de la chaîne motrice (10) du véhicule autochargeur et il est disposé entre un moyen de tension (26) et un appui (27) du dispositif de tension (24) sur le châssis du véhicule (22) ou entre un moyen de contact (28) du dispositif de tension (24) et du moyen de tension (26).

7. Véhicule autochargeur selon la revendication 2, caractérisé en ce que le transducteur de force (12) est raccordé à un dispositif de tension (24) pour un moyen d'entraînement flexible (25) de la chaîne motrice (10) du véhicule autochargeur et est disposé entre le moyen de contact (28) du dispositif de tension (24) et le châssis de véhicule (22).

8. Véhicule autochargeur selon l'une des revendications précédentes, caractérisé en ce que le transducteur de force (12) ou le dispositif de transmission (29) comporte au moins une position de commutation préréglable sur laquelle le dispositif de commutation (13) de l'entraînement du plancher à racloir (14) se met en marche ou s'arrête.

9. Véhicule autochargeur selon l'une des revendications précédentes, caractérisé en ce que le transducteur de force (12) ou le dispositif de transmission (29) comporte au moins deux positions de commutation préréglables, moyennant quoi dans l'une d'entre elles le dispositif de commande (15) s'enclenche ou s'arrête pour l'actionnement du moyen de réglage (16).

10. Véhicule autochargeur selon l'une des deux revendications précédentes, caractérisé en ce que le transducteur de force (12) est raccordé par l'intermédiaire d'un dispositif de transmission (29) dans une position de commutation au dispositif de commutation (13) de l'entraînement du plancher à racloir (14) et/ou dans une autre position de commutation au dispositif de commande (15) du moyen de réglage (16) pour faire basculer en sortie ou pour faire basculer en entrée le mécanisme de coupe (17).

11. Véhicule autochargeur selon l'une des revendications précédentes, caractérisé en ce que le transducteur de force (12) est conçu sous forme de transducteur mécanique et le dispositif de transmission (29) est constitué par une tringlerie mécanique.

12. Véhicule autochargeur selon l'une des revendications précédentes, caractérisé en ce que le transducteur de force (12) est conçu sous forme de transducteur électromécanique, à induction, piézoélectrique, hydromécanique ou hydraulique et le dispositif de transmission (29) est conçu sous forme de conduite de transmission électrique ou hydraulique.
